# EUROPEAN PATENT SPECIFICATION

(11) **EP 3 312 477 B1**
(45) Date of publication and mention of the grant of the patent: **11.09.2019**
(21) Application number: 17196815.9
(22) Date of filing: 17.10.2017
(51) Int. Cl.: F16H 57/04, F16H 61/00, F01M 1/02, F01M 5/00, F01M 5/02

(54) **OIL SUPPLY SYSTEM**
ÖLZUFUHRSYSTEM
SYSTÈME D'ALIMENTATION EN HUILE

(30) Priority: 21.10.2016 JP 2016207017
(43) Date of publication of application: 25.04.2018
(73) Proprietor: AISIN SEIKI KABUSHIKI KAISHA, Kariya-shi Aichi 448-8650 (JP)
(72) Inventor: HATA, Hirokazu, Kariya-shi, Aichi 448-8650 (JP)
(74) Representative: Kramer Barske Schmidtchen Patentanwälte PartG mbB

(56) References cited:
- WO-A1-2007/096719
- JP-A- 2003 094 984
- JP-A- 2006 161 850
- JP-A- 2015 218 867

## Description

### TECHNICAL FIELD

This disclosure generally relates to an oil supply system.

### BACKGROUND DISCUSSION

An auto-stop and auto-start device of an internal combustion engine including an oil pump driven by an engine and an electrically-driven oil pump for supplying oil (automatic transmission fluid, or AFT) to an oil hydraulic device (an oil hydraulic transmission mechanism in the specification) is disclosed in JP2003-94984A (hereinafter referred to as Patent reference 1). When the internal combustion engine stops, the auto-stop and auto-start device of the internal combustion engine drives the electrically-driven oil pump.

According to Patent reference 1, the device includes an AFT warmer exchanging heat between the oil supplied to the oil hydraulic device and coolant in the internal combustion engine. Accordingly, the oil is heated when being cooler than the coolant, and is cooled when being warmer than the coolant.

An oil supply device is disclosed in JP2015-218867A (hereinafter referred to as Patent reference 2). According to Patent reference 2, the oil supply device does not disclose an oil pump that is driven by an internal combustion engine and an electrically-driven oil pump, however, includes two transmission devices separately supplying oil in an oil pan to a rotary electric device and a power transmission mechanism for cooling the rotary electric device and for lubricating the power transmission mechanism. The oil supply device operates a temperature management of the oil supplied to the two transmission devices.

According to Patent reference 2, the two transmission devices each include an oil pump, a heat exchanger, and a bulkhead defining a reservoir space of the oil pan. Accordingly, the oil is inhibited from mixing in the two reservoir spaces in the oil pan. The temperature management of the oil is achieved by the supply of the oil in the two reservoir spaces to the two transmission devices.

As disclosed in Patent reference 1, in a vehicle including a transmission that changes gear stages by the oil pressure, in a case where an idling stop control automatically stopping the internal combustion engine when the vehicle stops, and a coast-stop control automatically stopping the internal combustion engine from a start of speed reduction for stopping the vehicle, the oil pressure for maintaining the gear-shift state of the transmission is required.

The oil used in the transmission that changes gear stages by the operation of, for example, a clutch, using the oil pressure preferably has less viscosity change in response to a temperature level. However, even with the oil having less viscosity, the viscosity may increase in a low temperature level, and in a case where the electrically-driven oil pump is operated in a state where the oil is in the low temperature level, an excessive load may be acted on the electrically-driven oil pump.

As such, in a case where the viscosity of the oil is high, not only the durability of the electrically-driven oil pump decreases but also the appropriate oil pressure is not provided, therefore, as disclosed in Patent reference 1, a control mode that does not automatically stop the internal combustion engine in a case where the temperature of the oil is low is set.

Here, assuming, for example, a system including a heat exchanger managing an oil temperature by the heat exchange between the oil and coolant of the internal combustion engine in the oil supply system supplying the oil from the oil pump driven by the internal combustion engine and the electrically-driven oil pump to the oil hydraulic device, there may be an inconvenient issue below.

That is, in such system, the oil is heated after the start of the internal combustion engine and the viscosity of the oil decreases. However, because the temperature of all amount of the oil is required to increase, it takes time until the electrically-driven oil pump is shifted to be in the appropriately operable state without being acted with a large negative load.

Having the bulkhead in the oil pan as disclosed in Patent reference 2 against such issue may be effective, however, forming oil flow passages of the two systems as disclosed in Patent reference 2 is irrational and impractical.

A need thus exists for an oil supply system supplying an oil from an oil pump driven by an internal combustion engine and an electrically-driven oil pump to an oil hydraulic device that operates the electrically-driven oil pump as quick as possible after the internal combustion engine starts operating.

### SUMMARY

According to an aspect of this disclosure, an oil supply system includes a first oil pump being connected to a first suction flow path and a first supply flow path, the first oil pump sucking an oil in an oil pan by the first suction flow path and supplying the sucked oil to an oil hydraulic device via the first supply flow path by being driven by a drive force generated at an internal combustion engine that performs a stop control and a start control in response to a running state of a vehicle, a second oil pump being connected to a second suction flow path and a second supply flow path, the second oil pump sucking the oil in the oil pan by the second suction flow path and supplying the sucked oil to the oil hydraulic device via the second supply flow path by being driven by an electric motor, and a heat exchanging flow path including a heat exchanger, the heat exchanging flow path returning a part of the oil supplied to the oil hydraulic device to the oil pan after a heat exchange is operated by the heat exchanger on which a heat of a coolant of the internal combustion engine is acted. The oil pan includes a bulkhead that defines a first reservoir being connected to the first suction flow path and a second reservoir being connected to the second suction flow path. The heat exchanging flow path is connected to the second reservoir.

According to the characteristic configuration of the disclosure, after the internal combustion engine starts operating, the part of the oil supplied to the oil hydraulic device is returned to the second reservoir via the heat exchanging flow path after being heated by the heat exchanger. The oil pan is defined by the bulkhead to include the first reservoir supplying the oil to the first oil pump, and the second reservoir supplying the oil to the second oil pump, and therefore, the oil returned to the second reservoir via the heat exchanger does not mix with the oil in the first reservoir, and the temperature level of the second reservoir may increase in a short time. Accordingly, the second oil pump may easily operate in a short time after the start of the operation of the internal combustion engine.

According to another aspect of this disclosure, the second reservoir includes a position to which the heat exchanging flow path returns the oil, the position that is set lower than a protruding end of the bulkhead in a height direction.

Accordingly, the oil from the heat exchanging flow path may return to a position lower than the oil surface of the second reservoir. For example, the heated oil is inhibited from flowing over the bulkhead to flow in the first reservoir, or the oil with the low temperature is inhibited from remaining in a bottom portion of the second reservoir. Specifically, in the configuration, the oil returning from the heat exchanging flow path circulates in the second reservoir, and therefore, the oil temperature in the second reservoir may be equalized.

According to further aspect of this disclosure, the second reservoir includes a volume that is set smaller than a volume of the first reservoir.

According to the configuration, the oil from the heat exchanging flow path returns to the second reservoir. Therefore, for example, comparing to a case where the oil from the heat exchanging flow path returns to the first reservoir, the time to increase the oil temperature may be reduced.

According to still another aspect of this disclosure, the bulkhead includes an on-off valve (34) supplying the oil in the first reservoir to the second reservoir in response to a lowering of an oil surface of the second reservoir.

According to the configuration, in a case where the oil surface of the second reservoir comes to be lower than the oil surface of the first reservoir, the on-off valve opens by the pressure difference of the oil in the first reservoir and the second reservoir. Accordingly, the oil in the first reservoir may be supplied to the second reservoir. Thus, the trouble in which the oil may not be supplied to the transmission by the extreme decrease of the oil in the second reservoir may be avoided.

According to further aspect of this disclosure, the oil supply system further includes a three-way valve being provided at a part where the first supply flow path and the heat exchanging flow path are connected with each other, and a control unit controlling at least the three-way valve to open and close. The control unit closes a valve of the heat exchanging flow path of the three-way valve in a case of operating the oil hydraulic device after starting the internal combustion engine. The control unit opens the valve of the heat exchanging flow path of the three-way valve by a predetermined amount, and closes a valve of the oil hydraulic device of the three-way valve by a predetermined amount in a case of not operating the oil hydraulic device when operating the internal combustion engine.

According to the configuration, the oil accumulated in the second reservoir may increase by the supply of the part of the oil from the first oil pump to the heat exchanging flow path.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a configuration of an oil supply system of a first embodiment disclosed here; and
Fig. 2 is a view illustrating an oil supply system of a second embodiment.

### DETAILED DESCRIPTION

Hereinafter, embodiments of the disclosure will hereunder be explained with reference to the drawings.

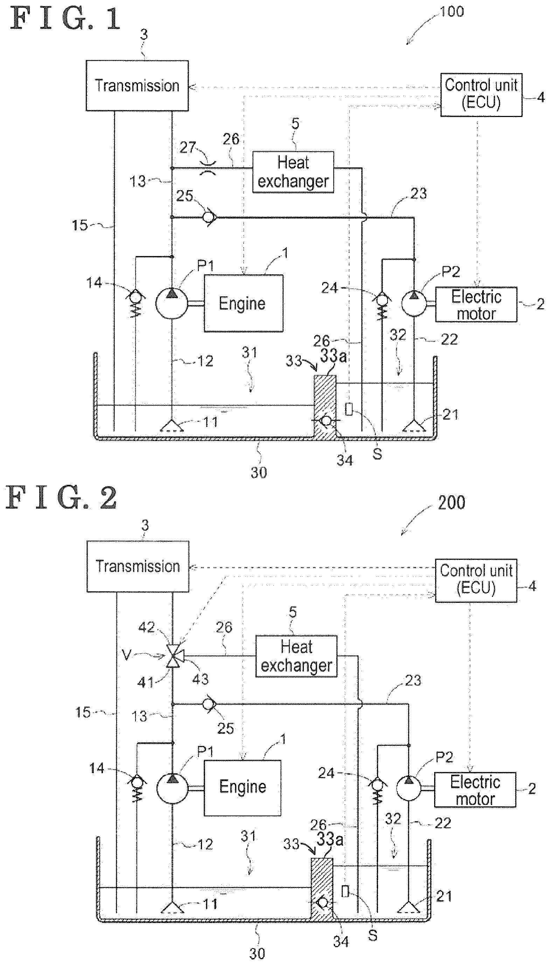

An oil supply system in a first embodiment will be schematically explained. As illustrated in Fig. 1, an oil supply system 100 includes a first oil pump P1 driven by an engine 1 serving as an internal combustion engine, a second oil pump P2 driven by a built-in electric motor 2, and flow paths supplying oil from the first oil pump P1 and the second oil pump P2 to a transmission 3 serving as an oil hydraulic device.

The oil supply system 100 is provided at a vehicle of, for example, an automobile, and a control unit 4 functioning as an Electric Control Unit or ECU controls the electric motor 2 of the second oil pump P2. The control unit 4 controls the engine 1 and the transmission 3.

The control unit 4 automatically sets a rotary speed of the engine 1 and gear stages of the transmission 3 based on a negative load acted on a running system, and for example, an acceleration operation performed by a driver, when the vehicle runs. When the vehicle stops by the operation of the brake pedal, the control unit 4 performs the stop control of the engine 1 (so-called idling stop control), and operates the second oil pump P2 in connection with the stop control. As such, when the control unit 4 operates the second oil pump P2, the oil having the pressure level required to maintain the gear-shift state is supplied to the transmission 3 to maintain the gear-shift state of the transmission 3.

Moreover, in a case where the brake pedal is released after the stop control, the control unit 4 operates the start control starting the engine 1, and stops the second oil pump P2 in connection with the start control.

The transmission 3 includes an oil hydraulic clutch shifting the gear stages and an oil hydraulic actuator of, for example, an oil hydraulic cylinder. A brushless direct current motor, or a brushless DC motor is used for the electric motor 2 built in the second oil pump P2, and obtains a drive force corresponding to the supplied electricity.

An oil pan 30 serving as an oil reservoir is provided at a bottom portion of the transmission 3. The oil pan 30 is defined by a bulkhead 33 to include a first reservoir 31 and a second reservoir 32. In the oil pan 30, the bulkhead 33 is set at a position such that a volume of the first reservoir 31 is greater than a volume of the second reservoir 32. The bulkhead 33 includes a check-valve-type on-off valve 34 sending the oil in the first reservoir 31 to the second reservoir in response to a lowering of an oil surface of the second reservoir 32. The second reservoir 32 further includes a temperature sensor S configured by, for example, a thermistor, for detecting the temperature of the oil.

The first oil pump P1 sucks the oil in the first reservoir 31 of the oil pan 30 via a first strainer 11 and a first suction flow path 12, and supplies the sucked oil to the transmission 3 via a first supply flow path 13. The first supply flow path 13 includes a branched first relief valve 14 inhibiting the increase of the pressure level of the first supply flow path 13 by returning the oil to the first reservoir 31.

The second oil pump P2 sucks the oil in the second reservoir 32 of the oil pan 30 via a second strainer 21 and a second suction flow path 22, and supplies the sucked oil from the second supply flow path 23 to the first supply flow path 13. The second supply flow path 23 includes a branched second relief valve 24 inhibiting the increase of the pressure level of the second supply flow path 23 by returning the oil to the second reservoir 32. A check valve 25 is provided at an intermediate portion of the second supply flow path 23.

A return flow path 15 returning the oil supplied to the oil hydraulic actuator of the transmission 3 to the first reservoir 31 is provided. The return flow path 15 returns the oil to a lower position (level) than an oil surface of the first reservoir 31. That is, the discharging position of the return flow path 15 is always set lower than the surface of the accumulated oil of the first reservoir 31.

The oil supply system 100 includes a heat exchanging flow path 26 taking out and branching a part of the oil supplied to the first supply flow path 13. The heat exchanging flow path 26 includes a heat exchanger 5 acted with heat of the coolant of the engine 1. The heat exchanging flow path 26 includes an orifice 27 being provided at a position in the vicinity of the first supply flow path 13 relative to the heat exchanger 5, and therefore, the pressure level of the first supply flow path 13 is inhibited from decreasing.

The heat exchanging flow path 26 returns the oil to a position of the second reservoir 32 lower than a protruding end 33a of the bulkhead 33 in a height direction. Fig. 1 illustrates a configuration in which the position (level) where the heat exchanging flow path 26 returns the oil to the second reservoir 32 is set at a position lower than a sucking position of the first strainer 11.

Specifically, the oil surface of the second reservoir 32 does not lower than a supplying position of the oil by the on-off valve 34. Accordingly, the oil may be securely sucked by the setting of the sucking position of the first strainer lower than the oil supplying position of the on-off valve 34. Moreover, the oil may be sent to a position lower than the oil surface of the second reservoir 32 by the setting of the discharging position of the heat exchanging flow path 26 to the position lower than the sucking position of the first strainer 11.

As such, the first suction flow path 12 and the return flow path 15 are connected to the first reservoir 31 of the oil pan 30, and the second suction flow path 22 and the heat exchanging flow path 26 are connected to the second reservoir 32 of the oil pan 30.

The control mode and the flow of the oil will hereunder be explained. The control unit 4 outputs control signals to the engine 1, the transmission 3, and the electric motor 2 of the second oil pump P2, and inputs temperature signals detected by the temperature sensor S.

As described above, the control unit 4 sets the rotary speed of the engine 1 and the gear stage of the transmission 3 based on the negative load acted on the running system, and, for example, the acceleration operation performed by a driver, when the vehicle runs, and operates the stop control and the start control. In a case where the temperature level of the oil detected by the temperature sensor S is lower than a set value, the control unit 4 sets a control mode that does not operate the stop control, and operates the stop control in a case where the temperature level of the oil is equal to or higher than the set value.

As such, the reason why the control unit 4 does not operate the stop control in a state where the temperature level of the oil is low is that the required pressure cannot be obtained even driving the second oil pump P2, and the second oil pump P2 may be damaged by the high negative load because the viscosity of the oil is high in the low temperature.

Accordingly, after the engine 1 starts, the transmission 3 performs the transmission operation by the oil supplied thereto from the first oil pump P1. In a case where the oil is supplied to the transmission 3 from the first oil pump P1 via the first supply flow path 13, a part of the oil flows in the heat exchanging flow path 26 and is heated by the heat exchanger 5.

The heat exchanger 5 includes a configuration in which the coolant of the engine 1 is supplied. Accordingly, in a case where the temperature of the oil flowing in the heat exchanging flow path 26 is lower than the temperature of the coolant, the oil flowing in the heat exchanging flow path 26 is heated, and in a case where the oi is higher than the temperature of the coolant, the oil in the heat exchanging flow path 26 is cooled.

Flowing as described above, the oil heated by the heat exchanger 5 is supplied to the second reservoir 32 in a process where the temperature level of the engine 1 increases after the startup of the engine 1. Because the oil in the second reservoir 32 and the oil in the first reservoir 31 do not mix with each other, the increase of the oil temperature in the second reservoir 32 is enhanced.

In a state where the temperature of the oil detected by the temperature sensor S reaches equal to or higher than the set value, the engine 1 operates the stop control and the second oil pump P2 operates in connection with the stop control of the engine when the vehicle stops by the operation of the brake pedal. Then, in a case where the brake pedal is released, the engine 1 operates the start control.

Either in the stop control or in the start control, the control unit 4 operates the engine 1 (operates the first oil pump P1) and the second oil pump P2 simultaneously so as to continuously supply the oil to the transmission 3.

That is, because the rotary speed of the engine 1 gradually changes by either the stop control or the start control, the control unit 4 operates the second oil pump P2 at a timing when the rotary speed of the engine 1 decreases to a predetermined value in the stop control, and stops the second oil pump P2 at a timing when the rotary speed of the engine 1 increases to a predetermined value in the start control.

In the oil supply system 100, in a case where the oil surface of the second reservoir 32 rises by the continuous supply of the oil, the oil in the second reservoir 32 is supplied to the first reservoir 31 by getting over (overflowing) the protruding end 33a of the bulkhead 33.

On the other hand, in a case where the oil surface of the second reservoir 32 comes to be lower than the position of the on-off valve 34 by the suction of the oil in the second reservoir 32 by the second oil pump P2, the oil in the first reservoir 31 is supplied to the second reservoir 32 by the release of the on-off valve 34. That is, the on-off valve 34 maintains in the closed state by the pressure difference of the oil in a case where the oil surface of the second reservoir 32 is higher than the oil surface of the first reservoir 31, and the on-off valve 34 opens by the pressure difference of the oil and supplies the oil in a case where the oil surface of the second reservoir 32 comes to be lower than the oil surface of the first reservoir 31.

Fig. 1 illustrates the on-off valve 34 using a ball. Alternatively, for example, the on-off valve 34 may include a resin plate that flexibly deforms and closes a hole formed at the bulkhead 33 at a position of the second reservoir 32, or may include a configuration in which a plate member is spring-biased.

According to the first embodiment, following effects and advantages may be attained.

According to the oil supply system 100, because the oil heated by the heat exchanger 5 is supplied to the second reservoir 32 that includes the volume smaller than the volume of the first reservoir 31 of the oil pan 30 after the engine 1 starts, the oil temperature level of the second reservoir 32 may rise in a short time even in a low-temperature atmosphere.

Accordingly, in a case where the oil includes a low temperature, the time limiting the stop control stopping the engine 1 may be shortened when the vehicle stops by the operation of the brake pedal. As a result, fuel efficiency may be enhanced.

In a case where the oil surface of the second reservoir 32 of the oil pan 30 comes to be low in a large amount, the on-off valve 34 automatically opens and the oil in the first reservoir 31 may be supplied to the second reservoir 32, and therefore, a trouble in which the oil is not supplied by the second oil pump P2 may be avoided.

The overall temperature level of the transmission 3 may be higher than the temperature level of the coolant of the engine 1. However, in a case where the temperature level of the oil flowing in the heat exchanging flow path 26 is lower than the temperature level of the coolant, the heat exchanger 5 heats the oil. In a case where the oil is hotter than the coolant, the heat exchanger 5 cools the oil. Thus, the temperature level of the oil accumulated in the second reservoir 32 may be brought in a range smaller than a fluctuating range of the whole temperature level of the transmission 3, and the second oil pump P2 may operate within an appropriate temperature range.

A second embodiment of an oil supply system 200 will hereunder be explained. The disclosure may be configured as below other than the aforementioned first embodiment. The same components as those described in the first embodiment are marked with the same reference numerals.

As illustrated in Fig. 2, a three-way valve V is provided at a part where the first supply flow path 13 and the heat exchanging flow path 26 are connected with each other. The three-way valve V includes a rotary-type configuration rotating a valve body by the drive force of an electric actuator.

The three-way valve V includes three ports which are an introduction port 41, a supply port 42 (i.e., serving as a valve of the oil hydraulic device), and a branch port 43 (i.e., serving as a valve of the heat exchanging flow path). The introduction port 41 communicates with the first supply flow path 13 of the discharge side of the first oil pump P1. The supply port 42 communicates with the transmission 3. The branch port 43 communicates with the heat exchanging flow path 26. The control unit 4 may control the flow of the oil at the introduction port 41, the supply port 42, and the branch port 43.

In a state where the transmission 3 shifts the gear after the start-up of the engine 1, the all amount of the oil from the first oil pump P1 is supplied to the transmission 3 by the closing of the branch port 43. At a timing when the transmission 3 does not shift the gear in a state where the engine 1 operates, by slightly closing the supply port 42 so as to slightly reduce the oil amount supplied to the transmission 3 and by slightly opening the branch port 43 in connection with the slight closing of the supply port 42, the temperature of the oil accumulated in the second reservoir 32 may increase by the supply of the part of the oil from the first oil pump P1 to the heat exchanging flow path 26.

According to the aforementioned configuration, comparing to a configuration in which the orifice 27 is used in the aforementioned first embodiment, the all amount of the oil from the first oil pump P1 may be supplied to the transmission 3 when the transmission 3 shifts the gear. Accordingly, the transmission 3 may securely and speedily shifts the gear.

According to the configuration in the second embodiment, at a timing when the transmission 3 does not change the gear in a state where the engine 1 operates, the control mode may be set such that the amount of the oil supplied to the transmission 3 slightly decreases by the slight closing of the supply port 42 by a specified time per interval, and such that the branch port 43 slightly opens in connection with the slight decrease of the oil amount.

The first and second embodiments may be modified as follows. A relief valve may be provided at an intermediate portion of the first supply flow path 13, and in a case where the pressure level of the first supply flow path 13 increases higher than the pressure level of the relief valve, the part of the oil may be discharged to the heat exchange flow path 26.

In the configuration including the relief valve, by the setting of the relief pressure level so as to make the relief pressure level higher than a lowest pressure level required by the transmission 3 to perform the transmission operation, the oil may be supplied to the heat exchange flow path 26 during the appropriate performance of the transmission 3.

The oil supply system 100, 200 may be configured in a variable valve timing control device controlling the opening and closing timing of an intake valve of the engine 1 by the oil pressure level. The oil supply system 100, 200 may supply a lubricating oil serving as an operation oil in the engine 1, and may include the first reservoir 31 and the second reservoir 32 at the oil pan 30.

In this configuration, the oil temperature level of the operation oil supplied to the variable valve timing control device may increase in a short time, and the setting of the opening and closing timing of the valve may be performed quickly.

The disclosure may be used to an oil supply system supplying oil from an oil pump driven by an internal combustion engine and an oil pump driven by an electric motor to an oil hydraulic device.

## Claims

1. An oil supply system (100, 200), comprising:
a first oil pump (P1) being connected to a first suction flow path (12) and a first supply flow path (13), the first oil pump (P1) being configured to suck an oil in an oil pan (30) by the first suction flow path (12) and to supply the sucked oil to an oil hydraulic device (3) via the first supply flow path (13) by being driven by a drive force generated at an internal combustion engine (1) that performs a stop control and a start control in response to a running state of a vehicle;
a second oil pump (P2) being connected to a second suction flow path (22) and a second supply flow path (23), the second oil pump (P2) being configured to suck the oil in the oil pan (30) by the second suction flow path (22) and to supply the sucked oil to the oil hydraulic device (3) via the second supply flow path (23) by being driven by an electric motor (2); and
a heat exchanging flow path (26) including a heat exchanger (5), the heat exchanging flow path (26) being configured to return a part of the oil supplied to the oil hydraulic device (3) to the oil pan (30) after a heat exchange is operated by the heat exchanger (5) on which a heat of a coolant of the internal combustion engine (1) is acted, **characterized in that**
the oil pan (30) includes a bulkhead (33) that defines a first reservoir (31) being connected to the first suction flow path (12) and a second reservoir (32) being connected to the second suction flow path (22), and
the heat exchanging flow path (26) is connected to the second reservoir (32).

2. The oil supply system (100, 200) according to Claim 1, wherein the second reservoir (32) includes a position to which the heat exchanging flow path (26) returns the oil, the position that is set lower than a protruding end (33a) of the bulkhead (33) in a height direction.

3. The oil supply system (100, 200) according to either Claim 1 or 2, wherein the second reservoir (32) includes a volume that is set smaller than a volume of the first reservoir (31).

4. The oil supply system (100, 200) according to any one of Claims 1 to 3, wherein the bulkhead (33) includes an on-off valve (34) supplying the oil in the first reservoir (31) to the second reservoir (32) in response to a lowering of an oil surface of the second reservoir (32).

5. The oil supply system (200) according to any one of Claims 1 to 4, further comprising:
a three-way valve (V) being provided at a part where the first supply flow path (13) and the heat exchanging flow path (26) are connected with each other; and
a control unit (4) configured to control at least the three-way valve (V) to open and close, wherein
the control unit (4) is configured to close a valve of the heat exchanging flow path (43) of the three-way valve (V) in a case of operating the oil hydraulic device (3) after starting the internal combustion engine (1), and
the control unit (4) is configured to open the valve of the heat exchanging flow path (43) of the three-way valve (V) by a predetermined amount, and to close a valve of the oil hydraulic device (42) of the three-way valve (V) by a predetermined amount in a case of not operating the oil hydraulic device (3) when operating the internal combustion engine (1).

## Patentansprüche

1. Ölzufuhrsystem (100, 200), mit:
einer ersten Ölpumpe (P1), die mit einem ersten Ansaugströmungsweg (12) und einem ersten Zufuhrströmungsweg (13) verbunden ist, die dazu ausgebildet ist, ein Öl in einer Ölwanne (30) durch den ersten Ansaugströmungsweg (12) anzusaugen und das angesaugte Öl einer Ölhydraulikvorrichtung (3) über den ersten Zufuhrströmungsweg (13) zuzuführen, indem sie durch eine Antriebskraft, die an einer Brennkraftmaschine (1) erzeugt wird, die eine Stoppsteuerung und eine Startsteuerung in Erwiderung auf einen Laufzustand eines Fahrzeugs durchführt, angetrieben wird;
einer zweiten Ölpumpe (P2), die mit einem zweiten Ansaugströmungsweg (22) und einem zweiten Zufuhrströmungsweg (23) verbunden ist, die dazu ausgebildet ist, das Öl in der Ölwanne (30) durch den zweiten Ansaugströmungsweg (22) anzusaugen und das angesaugte Öl der Ölhydraulikvorrichtung (3) über den zweiten Zufuhrströmungsweg (23) zuzuführen, indem sie durch einen Elektromotor (2) angetrieben wird; und
einem Wärmetauschströmungsweg (26) mit einem Wärmetauscher (5), welcher Wärmetauschströmungsweg (26) dazu ausgebildet ist, einen Teil des Öls, das der Ölhydraulikvorrichtung (3) zugeführt wird, zu der Ölwanne (30) zurückzuführen, nachdem ein Wärmeaustausch durch den Wärmetauscher (5) vorgenommen wird, auf den eine Wärme eines Kühlmittels der Brennkraftmaschine (1) wirkt, **dadurch gekennzeichnet, dass**
die Ölwanne (30) eine Trennwand (33) aufweist, die ein erstes Reservoir (31), das mit dem ersten Ansaugströmungsweg (12) verbunden ist, und ein zweites Reservoir (32), das mit dem zweiten Ansaugströmungsweg (22) verbunden ist, definiert, und
der Wärmetauschströmungsweg (26) mit dem zweiten Reservoir (32) verbunden ist.

2. Ölzufuhrsystem (100, 200) nach Anspruch 1, bei dem das zweite Reservoir (32) eine Position aufweist, zu der der Wärmetauschströmungsweg (26) das Öl zurückführt, die niedriger als ein vorstehendes Ende (33a) der Trennwand (33) in einer Höhenrichtung festgelegt ist.

3. Ölzufuhrsystem (100, 200) nach entweder Anspruch 1 oder 2, bei dem das zweite Reservoir (32) ein Volumen aufweist, das kleiner als ein Volumen des ersten Reservoirs (31) festgelegt ist.

4. Ölzufuhrsystem (100, 200) nach einem der Ansprüche 1 bis 3, bei dem die Trennwand (33) ein Schaltventil (34) aufweist, das das Öl in dem ersten Reservoir (31) dem zweiten Reservoir (32) in Erwiderung auf ein Absenken einer Öloberfläche des zweiten Reservoirs (32) zuführt.

5. Ölzufuhrsystem (200) nach einem der Ansprüche 1 bis 4, ferner mit:
einem Dreiwegeventil (V), das an einem Teil vorgesehen ist, an dem der erste Zufuhrströmungsweg (13) und der Wärmetauschströmungsweg (26) miteinander verbunden sind; und
einer Steuerungseinheit (4), die dazu ausgebildet ist, zumindest das Dreiwegeventil (V) zum Öffnen und Schließen zu steuern,
bei dem
die Steuerungseinheit (4) dazu ausgebildet ist, in einem Fall eines Betreibens der Ölhydraulikvorrichtung (3) nach einem Starten der Brennkraftmaschine (1) ein Ventil des Wärmetauschströmungswegs (43) des Dreiwegeventils (V) zu schließen, und
die Steuerungseinheit (4) dazu ausgebildet ist, in einem Fall eines Nicht-Betreibens der Ölhydraulikvorrichtung (3), wenn die Brennkraftmaschine (1) betrieben wird, das Ventil des Wärmetauschströmungswegs (43) des Dreiwegeventils (V) um ein vorherbestimmtes Maß zu öffnen und ein Ventil der Ölhydraulikvorrichtung (42) des Dreiwegeventils (V) um ein vorherbestimmtes Maß zu schließen.

## Revendications

1. Système d'alimentation en huile (100, 200), comprenant :
une première pompe à huile (P1) reliée à une première voie d'écoulement d'aspiration (12) et à une première voie d'écoulement d'alimentation (13), la première pompe à huile (P1) étant configurée pour aspirer une huile dans un bac à huile (30) par la première voie d'écoulement d'aspiration (12) et pour fournir l'huile aspirée à un dispositif hydraulique à huile (3) par la première voie d'écoulement d'alimentation (13) en étant entraînée par une force motrice produite sur un moteur à combustion interne (1) qui réalise une commande d'arrêt et une commande de démarrage en réaction à un état de marche d'un véhicule,
une deuxième pompe à huile (P2) reliée à une deuxième voie d'écoulement d'aspiration (22) et à une deuxième voie d'écoulement d'alimentation (23), la deuxième pompe à huile (P2) étant configurée pour aspirer l'huile dans le bac à huile (30) par la deuxième voie d'écoulement d'aspiration (22) et pour fournir l'huile aspirée au dispositif hydraulique à huile (3) par la deuxième voie d'écoulement d'alimentation (23), en étant entraînée par un moteur électrique (2), et
un trajet d'écoulement d'échange de chaleur (26) comprenant un échangeur de chaleur (5), le trajet d'écoulement d'échange de chaleur (26) étant configuré pour renvoyer une partie de l'huile fournie au dispositif hydraulique à huile (3) vers le bac à huile (30) après un échange de chaleur est actionné par l'échangeur de chaleur (5) sur lequel une chaleur d'un réfrigérant du moteur à combustion interne (1) est exercée, **caractérisé en ce que**
le bac à huile (30) comprend une cloison (33) qui définit un premier réservoir (31) qui est relié au premier trajet d'écoulement d'aspiration (12) et un deuxième réservoir (32) qui est relié au deuxième trajet d'écoulement d'aspiration (22), et
le trajet d'écoulement d'échange de chaleur (26) est relié au deuxième réservoir (32).

2. Système d'alimentation en huile (100, 200) selon la revendication 1, dans lequel le deuxième réservoir (32) comprend une position vers laquelle le trajet d'écoulement d'échange de chaleur (26) renvoie l'huile, la position qui est réglée plus bas qu'une extrémité en saillie (33a) de la cloison (33) dans une direction en hauteur.

3. Système d'alimentation en huile (100, 200) selon la revendication 1 ou 2, dans lequel le deuxième réservoir (32) comprend un volume qui est réglé inférieur à un volume du premier réservoir (31).

4. Système d'alimentation en huile (100, 200) selon l'une quelconque des revendications 1 à 3, dans lequel la cloison (33) comprend une vanne tout ou rien (34) fournissant l'huile du premier réservoir (31) au deuxième réservoir (32) en réponse à un abaissement d'une surface d'huile du deuxième réservoir (32).

5. Système d'alimentation en huile (200) selon l'une quelconque des revendications 1 à 4, comprenant en outre :
une vanne à trois voies (V) prévue à un endroit où la première voie d'écoulement d'alimentation (13) et la voie d'écoulement d'échange de chaleur (26) sont reliées l'une à l'autre ; et
une unité de commande (4) configurée pour commander au moins la vanne à trois voies (V) pour ouvrir et fermer, où
l'unité de commande (4) est configurée pour fermer une vanne du trajet d'écoulement d'échange de chaleur (43) de la vanne à trois voies (V) dans un cas de fonctionnement du dispositif hydraulique à huile (3) après le démarrage du moteur à combustion interne (1), et
l'unité de commande (4) est configurée pour ouvrir la vanne du trajet d'écoulement d'échange de chaleur (43) de la vanne à trois voies (V) d'une quantité prédéterminée, et pour fermer une vanne du dispositif hydraulique à huile (42) de la vanne à trois voies (V) d'une quantité prédéterminée dans un cas de non fonctionnement du dispositif hydraulique à huile (3) lorsque le moteur à combustion interne (1) fonctionne.
